# EUROPEAN PATENT APPLICATION

(11) **EP 2 615 563 A1**
(43) Date of publication of application: **17.07.2013**
(21) Application number: 12161176.8
(22) Date of filing: 26.03.2012
(51) Int. Cl.: G06F 17/30, G06F 9/50

(54) **Device for synchronously sharing files and method for synchronously sharing files**

(30) Priority: 10.01.2012 TW 101100948
(71) Applicant: Synology Incorporated, Taipei 103 (TW)
(72) Inventor: Liao, Chien-Kai, 100 Taipei City (TW); Li, Yu-Hua, 600 Chiayi City (TW); Liu, Tai-Wei, 420 Taichung City (TW); Chu, Bie-I, 320 Taoyuan County (TW)
(74) Representative: Becker Kurig Straus

(57) **Abstract**

A device (100) for synchronously sharing files includes a processor (102) and a database (104). The processor (102) is used for utilizing a synchronous data folder (1022) to record a newest modified version of a file generated by a user operating the file, and synchronously transmitting the newest modified version of the file to other client devices. The database (104) is used for storing historical modified versions of the file generated by the user operating the file and the newest modified version of the file.

## Description

### Field of the Invention

The present invention relates to a device for synchronously sharing files and a method for synchronously sharing files according to the pre-characterizing clauses of claims 1 and 9.

### Background of the Invention

In the prior art, a basic manner of a Data Synchronization/Sharing mechanism is that an application program is installed on a client device, and then the application program can monitor file changes of the client device and transmit the file changes to a server through a transmission protocol thereof. The server can record the file changes to a file version record of a database of the server, and then the server can transmit the file changes to other client devices. Therefore, each client device connected to the server can have the file changes. Therefore, when Internet service is interrupted, each client device can still browse and edit the received file changes offline. In addition, the Data Synchronization/Sharing mechanism between the server and each client device can automatically restart after Internet service is recovered. In the prior art, if the user wants to access a predetermined file of a data synchronization system of the server, the user can only operate the predetermined file in the client device after all files of the server are downloaded to the client device. Or, the user accesses the predetermined file of the data synchronization system of the server through a web browser if the user does not want to download all the files of the server to the client device.

Therefore, in the prior art, either the client device downloads too many irrelevant files, which occupies data storage space thereof, or an operational interface provided by the server is unfriendly, which makes the server inconvenient to use by the user.

### Summary of the Invention

This in mind, the present invention aims at providing a device for synchronously sharing files and a method for synchronously sharing files that can utilize a synchronous data folder to record a user's newest modified version of a file by a user operating the file, and synchronously transmit the newest modified version of the file to other client devices.

This is achieved by a device for synchronously sharing files and a method for synchronously sharing files according to claims 1 and 9. The dependent claims pertain to corresponding further developments and improvements.

As will be seen more clearly from the detailed description following below, the claimed device for synchronously sharing files includes a processor and a database. The processor is used for utilizing an application program to synchronously record a newest modified version of a first file of a monitoring folder of a first client device generated by a user operating the first file to a synchronous data folder through a network, recording a newest modified version of a second file of the synchronous data folder generated by the user utilizing a second client device to directly operate the second file through a data access manner to the synchronous data folder, and/or recording a newest modified version of a third file of the synchronous data folder generated by the user utilizing a web browser of a third client device to directly operate the third file to the synchronous data folder. The database is used for storing the newest modified version of the first file, the newest modified version of the second file and the newest modified version of the third file. The processor further synchronously transmits the newest modified version of the first file, the newest modified version of the second file, and the newest modified version of the third file to other client devices.

### Brief Description of the Drawings

In the following, the invention is further illustrated by way of example, taking reference to the accompanying drawings thereof:
FIG. 1 is a diagram illustrating a device for synchronously sharing files according to an embodiment, and
FIG. 2 is a flowchart illustrating a method for synchronously sharing files according to another embodiment.

### Detailed Description

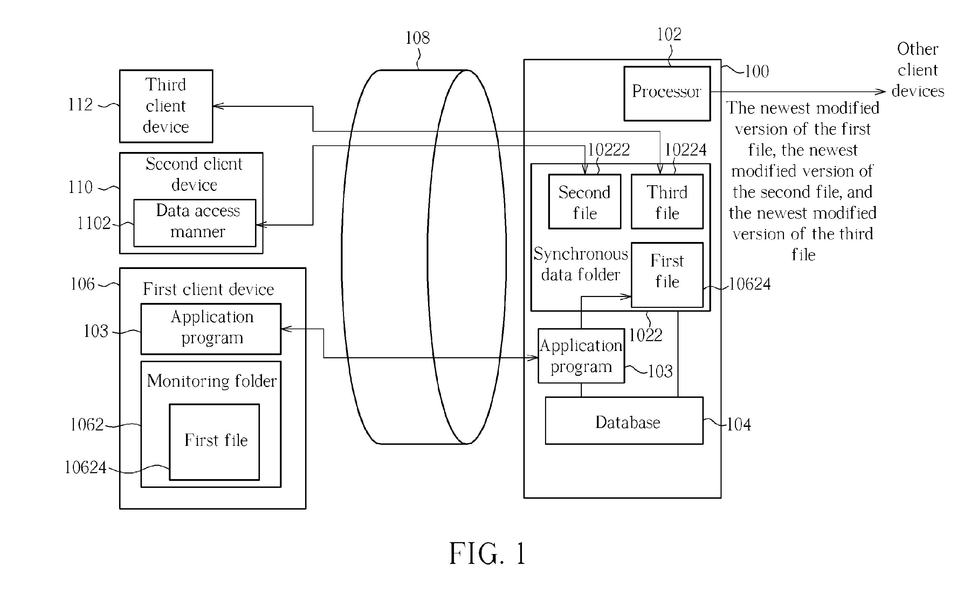

Please refer to FIG. 1. FIG. 1 is a diagram illustrating a device 100 for synchronously sharing files according to an embodiment. As shown in FIG. 1, the device 100 includes a processor 102 and a database 104. When a user operates a first file 10624 of a monitoring folder 1062 of a first client device 106 to generate a newest modified version of the first file 10624, the processor 102 utilizes an application program 103 further included by the device 100 to synchronously record the newest modified version of the first file 10624 to a synchronous data folder 1022 through the Internet 108, where the processor 102 can communicate with the Internet 108 through a wired connection manner or a wireless connection manner. In addition, the first client device 106 also has the application program 103 and the processor 102 further synchronously transmits the newest modified version of the first file 10624 to other client devices. In addition, the first file 10624 can be a file downloaded from the device 100 by the user or an original file in the monitoring folder 1062. In addition, the user can add, modify, delete, copy, or move the first file 10624 of the monitoring folder 1062 of the first client device 106 to generate the newest modified version of the first file 10624.

When the user utilizes a second client device 110 to directly operate a second file 10222 of the synchronous data folder 1022 to generate a newest modified version of the second file 10222 through a data access manner 1102, the processor 102 can record the newest modified version of the second file 10222 to the synchronous data folder 1022 and further synchronously transmit the newest modified version of the second file 10222 to other client devices. The data access manner 1102 can be a Common Internet File System (CIFS) protocol, a File Transfer Protocol (FTP), an Apple Filing Protocol (AFP), a Network File System (NFS), a Web Distributed Authoring and Versioning (WebDAV) protocol, or other internet data access manners. In addition, the user utilizes the second client device 110 to directly add, modify, delete, copy, or move the second file 10222 of the synchronous data folder 1022 to generate the newest modified version of the second file 10222 through the data access manner 1102.

When the user utilizes a web browser of a third client device 112 to directly operate a third file 10224 of the synchronous data folder 1022 to generate a newest modified version of the third file 10224, the processor 102 can record the newest modified version of the third file 10224 to the synchronous data folder 1022, and further synchronously transmit the newest modified version of the third file 10224 to other client devices. In addition, the user utilizes a web browser of the third client device 112 to directly add, modify, delete, copy, or move the third file 10224 of the synchronous data folder 1022 to generate the newest modified version of the third file 10224.

In addition, the database 104 is used for storing the newest modified version of the first file 10624, historical modified versions of the first file 10624, the newest modified version of the second file 10222, historical modified versions of the second file 10222, the newest modified version of the third file 10224, and historical modified versions of the third file 10224.

In addition, it is noted that the synchronous data folder 1022 only stores the newest modified version of the first file 10624, the newest modified version of the second file 10222, and the newest modified version of the third file 10224.

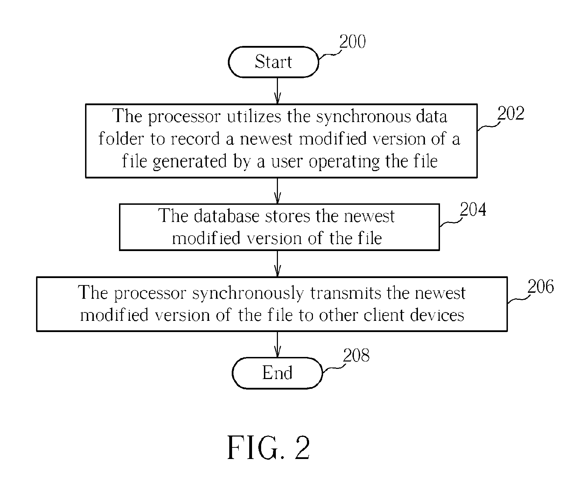

Please refer to FIG. 2 and FIG. 1. FIG. 2 is a flowchart illustrating a method for synchronously sharing files according to another embodiment. The method in FIG. 2 is illustrated using the device 100 in FIG. 1. Detailed steps are as follows:

| | |
|---|---|
| Step 200: | Start. |
| Step 202: | The processor 102 utilizes the synchronous data folder 1022 to record a newest modified version of a file generated by a user operating the file. |
| Step 204: | The database 104 stores the newest modified version of the file. |
| Step 206: | The processor 102 synchronously transmits the newest modified version of the file to other client devices. |
| Step 208: | End. |

In Step 202 and Step 204, when the user operates a first file 10624 of the monitoring folder 1062 of the first client device 106 (the first client device 106 has the application program 103) to generate the newest modified version of the first file 10624, the processor 102 utilizes the application program 103 included by the device 100 and the synchronous data folder 1022 to synchronously record the newest modified version of the first file 10624 generated by the user adding, modifying, deleting, copying, or moving the first file 10624 of the monitoring folder 1062 of the first client device 106 through the Internet 108, where the processor 102 can communicate with the Internet 108 through a wired connection manner or a wireless connection manner. In addition, the first file 10624 can be a file downloaded from the device 100 by the user or an original file in the monitoring folder 1062. When the user utilizes the second client device 110 to directly operate a second file 10222 of the synchronous data folder 1022 to generate the newest modified version of the second file 10222 through the data access manner 1102, the processor 102 utilizes the synchronous data folder 1102 to record the newest modified version of the second file 10222 generated by the user utilizing the second client device 110 to directly add, modify, delete, copy, or move the second file 10222 of the synchronous data folder 1022 through the data access manner 1102. When the user utilizes the web browser of the third client device 112 to directly operate a third file 10224 of the synchronous data folder 1022 to generate the newest modified version of the third file 10224, the processor 102 utilizes the synchronous data folder 1022 to record the newest modified version of the third file 10224 generated by the user utilizing the web browser of the third client device 112 to directly add, modify, delete, copy, or move the third file 10224 of the synchronous data folder 1022. In Step 204, each time the user operates the file to generate a newest modified version of the file, the database 104 can store the newest modified version of the file. Therefore, the database 104 can store the newest modified version and historical modified versions of the file generated by the user operating the file. Furthermore, the database 104 can store the newest modified version of the first file 10624, the historical modified versions of the first file 10624, the newest modified version of the second file 10222, the historical modified versions of the second file 10222, the newest modified version of the third file 10224, and the historical modified versions of the third file 10224. In Step 206, the processor 102 can synchronously transmit the newest modified version of the file to other client devices. Thus, the processor 102 can synchronously transmit the newest modified version of the first file 10624, the newest modified version of the second file 10222, and the newest modified version of the third file 10224 to other client devices.

To sum up, the device for synchronously sharing files and the method for synchronously sharing files utilize the processor to record a newest modified version of a file generated by the user operating the file to the synchronous data folder and synchronously transmit the newest modified version of the file to other client devices, and utilize the database to store the newest modified version and historical modified versions of the file. Therefore, compared to the prior art, the present invention not only can provide a plurality of manners which can be selected by the user to connect the device for synchronously sharing files and to update files of the synchronous data folder of the device for synchronously sharing files (such as the user connects the device for synchronously sharing files and updating files of the synchronous data folder of the device for synchronously sharing files through the first client device, the second client device, or the third client device), but can also ensure each client device connected to the device for synchronously sharing files through the Internet receives the newest modified version of the file.

## Claims

1. A device (100) for synchronously sharing files, **characterized by**:
a processor (102) for utilizing an application program (103) to synchronously record a newest modified version of a first file (10624) of a monitoring folder (1062) of a first client device (106) generated by a user operating the first file (10624) to a synchronous data folder (1022) through the Internet (108), recording a newest modified version of a second file (10222) of the synchronous data folder (1022) generated by the user utilizing a second client device (110) to directly operate the second file (10222) through a data access manner (1102) to the synchronous data folder (1022), and/or recording a newest modified version of a third file (10224) of the synchronous data folder (1022) generated by the user utilizing a web browser of a third client device (112) to directly operate the third file (10224) to the synchronous data folder (1022); and
a database (104) for storing the newest modified version of the first file (10624), the newest modified version of the second file (10222) and the newest modified version of the third file (10224);
**characterized in that** the processor (102) further synchronously transmits the newest modified version of the first file (10624), the newest modified version of the second file (10222), and the newest modified version of the third file (10224) to other client devices.

2. The device (100) of claim 1, **characterized in that** the database (104) is further used for storing historical modified versions of the first file (10624), historical modified versions of the second file (10222), and historical modified versions of the third file (10224).

3. The device (100) of claim 1, **characterized in that** the first client device (106) has the application program (103).

4. The device (100) of claim 1, **characterized in that** the data access manner (1102) is a Common Internet File System (CIFS) protocol, a File Transfer Protocol (FTP), an Apple Filing Protocol (AFP), a Network File System (NFS), a Web Distributed Authoring and Versioning (WebDAV) protocol, or other internet data access manners.

5. The device (100) of claim 1, **characterized in that** the processor (102) communicates with the Internet (108) through a wired connection manner or a wireless connection manner.

6. The device (100) of claim 1, **characterized in that** the user operating the first file (10624) of the monitoring folder (1062) of the first client device (106) comprises:
the user adding, modifying, deleting, copying, or moving the first file (10624) of the monitoring folder (1062) of the first client device (106).

7. The device (100) of claim 1, **characterized in that** the user utilizing the second client device (110) to directly operate the second file (10222) of the synchronous data folder (1022) through the data access manner (1102) comprises:
the user utilizing the second client device (110) to directly add, modify, delete, copy, or move the second file (10222) of the synchronous data folder (1022) through the data access manner (1102).

8. The device (100) of claim 1, **characterized in that** the user utilizing the web browser of the third client device (112) to directly operate the third file (10224) of the synchronous data folder (1022) comprises:
the user utilizing the web browser of the third client device (112) to directly add, modify, delete, copy, or move the third file (10224) of the synchronous data folder (1022).

9. A method for synchronously sharing files, **characterized by**:
utilizing a synchronous data folder (1022) to record a newest modified version of a file generated by a user operating the file;
storing the newest modified version of the file; and
transmitting synchronously the newest modified version of the file to other client devices.

10. The method of claim 9, **characterized in that** utilizing the synchronous data folder (1022) to record the newest modified version of the file generated by the user operating the file comprises:
utilizing an application program (103) to utilize the synchronous data folder (1022) to synchronously record a newest modified version of a first file (10624) of a monitoring folder (1062) of a first client device (106) generated by the user adding, modifying, deleting, copying, or moving the first file (10624) through the Internet (108).

11. The method of claim 10, **characterized in that** the first client device (106) has the application program (103).

12. The method of claim 9, **characterized in that** utilizing the synchronous data folder (1022) to record the newest modified version of the file generated by the user operating the file comprises:
utilizing the synchronous data folder (1022) to record a newest modified version of a second file (10222) of the synchronous data folder (1022) generated by the user utilizing a second client device (110) to directly add, modify, delete, copy, or move the second file (10222) of the synchronous data folder (1022) through a data access manner (1102).

13. The method of claim 12, **characterized in that** the data access manner (1102) is a Common Internet File System protocol, a File Transfer Protocol, an Apple Filing Protocol, a Network File System, a Web Distributed Authoring and Versioning protocol, or other internet data access manners.

14. The method of claim 9, **characterized in that** utilizing the synchronous data folder (1022) to record the newest modified version of the file generated by the user operating the file comprises:
utilizing the synchronous data folder (1022) to record a newest modified version of a third file (10224) of the synchronous data folder (1022) generated by the user utilizing a web browser of a third client device (112) to directly add, modify, delete, copy, or move the third file (10224) of the synchronous data folder (1022).

15. The method of claim 9, **characterized by**:
storing historical modified versions of the file generated by the user operating the file.
